# EUROPÄISCHE PATENTSCHRIFT

(11) **EP 2 119 336 B1**
(45) Veröffentlichungstag und Bekanntmachung des Hinweises auf die Patenterteilung: **28.11.2012**
(21) Anmeldenummer: 09006249.8
(22) Anmeldetag: 08.05.2009
(51) Int. Cl.: A01C 17/00

(54) **Dosiereinrichtung**
Metering device
Dispositif de dosage

(30) Priorität: 14.05.2008 DE 102008023547
(43) Veröffentlichungstag der Anmeldung: 18.11.2009
(73) Patentinhaber: Amazonen-Werke H. Dreyer GmbH & Co. KG, 49205 Hasbergen (DE)
(72) Erfinder: Johannaber, Stefan Jan, 49536 Lienen (DE)

(56) Entgegenhaltungen:
- EP-A- 0 545 894
- DE-A1- 4 106 560
- US-A- 3 157 403

## Beschreibung

Die Erfindung betrifft eine Dosiereinrichtung einer einen Vorratsbehälter aufweisenden landwirtschaftlichen Verteilmaschine.

Derartige Dosiereinrichtungen für als Schleuderstreuer ausgebildete Verteilmaschine sind beispielsweise durch die EP 28 18 816 A1 , US 3 157 403 oder EP 0 542 112 A1 bekannt. Diese Dosiereinrichtungen sind unterhalb der Auslauftrichter der Vorratsbehälter dieser landwirtschaftlichen Verteilmaschinen angeordnet. Diese Dosiereinrichtungen weisen einen mit einer Durchlassöffnung ausgestatteten Boden auf. Die Öffnungsweite der Durchlassöffnung ist mittels eines zugeordneten Schiebers zu verschließen und in ihrer Öffnungsweise einzustellen. Hierzu sind an dem Schieber in zwei Einstellrichtungen wirksame Verstellelemente angeordnet, um den Schieber jeweils in Schließ- oder Öffnungsstellung zu bringen. Die Öffnungsstellung wird mittels eines einstellbaren Anschlagelementes bestimmt, an dem der Schieber in seiner Öffnungsstellung zur Anlage kommt.

Bei den Verteilmaschinen der beiden vorgenannten Dokumente wird der Schieber jeweils mittels eines Federelementes in Öffnungsstellung gebracht und durch ein motorisches Stellelement in seine Schließstellung.

Durch die Ausgestaltung des Öffnungselementes für den Schieber als Federelement kann es unter schwierigen Einsatzbedingungen, insbesondere wenn der Schieber nach längerem Gebrauch bei mangelhafter Wartung zum Klemmen neigt, dazu kommen, dass der Schieber nur langsam in seine Öffnungsstellung gelangt oder diese unter Umständen überhaupt nicht erreicht.

Bei einem weiteren bekannten Stand der Technik, mittels welchem der Schieber durch ein in zwei entgegengesetzten Richtungen wirksames motorisches Stellelement jeweils sicher in die Öffnungs- oder Schließstellung gebracht wird. Hier ist jedoch nachteilig, dass, wenn der Schieber von einem motorischen Stellelement in Öffnungsstellung gebracht wird und die Schieberstellung durch Anlage des Schiebers an einem Anschlagelement bestimmt wird, immer ein großer Druck von dem motorischen Stellelement in ungedämpfter und ungefederter Weise auf das Anschlagelement ausgeübt wird. Dies führt zu großen Belastungen des Verstellelementes, des Schiebers und des Anschlagelementes, sowie weiterer evtl. dazwischen angeordneter Zwischenelemente.

Der Erfindung liegt die Aufgabe zugrunde, eine einfache Betätigungsmöglichkeit für eine Dosiereinrichtung mit einem über ein Verstellelement verstellbarem Schieber zur Einstellung der Öffnungsgröße der Durchlassöffnung zu schaffen.

Diese Aufgabe wird erfindungsgemäß durch die Merkmale des Patentanspruches 1 gelöst. Infolge dieser Maßnahme, zwischen den in zwei Einstellrichtungen wirksamen Verstellelement und dem an dem Anschlagelement zur Anlage gekommenden Schieber ein Federelement anzuordnen, wird eine zu große Belastung des Schiebers und des Anschlagelementes, auch wenn der Schieber sich durch Anlage an dem Anschlagelement in seiner Öffnungsposition befindet, durch das Verstellelement vermieden. Das wirksam zwischen dem Verstellelement und dem Schieber angeordnete Federelement erlaubt somit einen größeren Verstellweg des Verstellelementes als an sich für die Einstellung des Schiebers in seine Öffnungsposition, in welcher der Schieber an dem Anschlagelement zur Anlage kommt, nötig wäre. Hierdurch wird ein einfach aufgebautes Betätigungssystem für die erfindungsgemäße Dosiervorrichtung in einfacher Weise ohne zu starke Belastung der Bauteile der Dosiereinrichtung, insbesondere des Schiebers, des Anschlagelementes und des Verstellelementes gewährleistet.

Eine einfache Ausgestaltung des zwischen dem Schieber und dem Verstellelement angeordneten Zwischenelementes und des Federelementes mit möglichst wenig Bauteilen lässt sich dadurch erreichen, dass das Federelement als Schenkelfeder ausgebildet ist, dass der eine Schenkel der Schenkelfeder das Zwischenelement bildet und an dem Verstellelement angeordnet ist und dass der andere Schenkel der Schenkelfeder mit dem Schieber verbunden ist.

Hierdurch übernimmt die Schenkelfeder gleichzeitig die Aufgabe des Federelementes und des Zwischenelementes, um so eine federnde und dämpfende Wirkung zwischen Verstellelement und Schieber in einfacher Weise zu erreichen.

Um in einfacher Weise zu gewährleisten, dass das Verstellelement einen größeren Verstellweg ausführen kann, ohne dass zu große Kräfte auf den Schieber und das Anschlagelement übertragen werden, ist vorgesehen, dass das Mitnahmeelement des Schiebers ein Langloch aufweist, dass in diesem Langloch der an dem Verstellelement angeordnete Schenkel der Schenkelfeder bewegbar angeordnet ist.

Um eine einfache Überführung des Schiebers in seine Schließstellung bei der Ausgestaltung des Federelementes als Schenkelfeder zu erreichen, ist vorgesehen, dass beim Überführen des Schiebers in seine Schließstellung durch das Verstellelement der am Verstellelement angeordnete Schenkel der Schenkelfeder an dem einen Ende des Langloches anliegt.

Eine einfache Ausgestaltung der Verstellelemente lässt sich durch die Merkmale der Patentansprüche 5 oder 6 erreichen.

Um in einfacher Weise eine Verschwenkung des Schiebers und Betätigung des Schiebers verwirklichen zu können, insbesondere wenn der Schieber über einen Schwenkbolzen an dem Boden schwenkbar gelagert ist, ist vorgesehen, dass das Mitnahmeelement für den Schwenkbolzen drehfest mit dem Schieber verbunden ist.

Bei einer anderen Ausgestaltung des Federelementes der Dosiereinrichtung ist vorgesehen, dass das Federelement als Zugfeder ausgebildet ist, dass das Zwischenelement als schwenkbar am Boden gelagertes Hebelelement ausgebildet ist, dass an dem Hebelelement das Verstellelement und die Zugfeder befestigt ist.

Auch bei der Ausgestaltung des Federelementes als Zugfeder lassen sich so die erfindungsgemäßen Vorteile erreichen.

Hierbei ist zu einer einfachen Verstellung des Schiebers in seine Schließstellung vorgesehen, dass beim Überführen des Schiebers in seine Schließstellung durch das Verstellelement das Hebelelement an einem an dem Schieber angeordneten Mitnahmeelement anliegt.

Weitere Einzelheiten der Erfindung sind den übrigen Unteransprüchen, der Beispielsbeschreibung und den Zeichnungen zu entnehmen. Hierbei zeigen
- Fig. 1: den erfindungsgemäßen Schleuderstreuer in der Ansicht von hinten und in Prinzipdarstellung,
- Fig. 2: die in Fahrtrichtung gesehen den Abschluss des linken trichterförmigen Auslaufbereiches des Vorratsbehälters bildende Dosiereinrichtung in perspektivischer Darstellung,
- Fig. 3: die Dosiereinrichtung in der Ansicht III/III,
- Fig. 4: die Dosiereinrichtung in der Ansicht IV/IV,
- Fig. 5: die Dosiereinrichtung in der Ansicht V/V,
- Fig. 6: die Dosiereinrichtung mit sich in Schließstellung befindlichen Schieber in der Ansicht VI/VI,
- Fig. 7: die Dosiereinrichtung mit sich in Öffnungsstellung befindlichen Schieber in der Ansicht VI/VI,
- Fig. 8: eine andere erfindungsgemäß ausgestaltete Dosiereinrichtung in der Ansicht VI/VI mit sich in Schließstellung befindlichem Schieber und
- Fig. 9: die Dosiereinrichtung gemäß Fig. 8 mit sich in Öffnungsstellung befindlichem Schieber.

Die als Zwei-Scheibendüngerstreuer ausgebildete Verteilmaschine weist den durch ein dachförmiges Mittelteil 1 in zwei Auslauftrichter 2 aufgeteilten Vorratsbehälter 3 auf. Der Vorratsbehälter 3 ist mit einem nicht dargestellten Rahmen versehen, über den der Schleuderdüngerstreuer an den Dreipunktkraftheber eines Ackerschleppers anzuordnen ist. An den unteren Enden der Auslauftrichter 2 ist jeweils eine Dosiereinrichtung 4 angeordnet. Unterhalb der Dosiereinrichtung 4 sind auf aus einem Getriebeblock 5, der an dem nicht dargestellten Rahmen angeordnet ist, herausragenden und rotierend antreibbaren Wellen 6 Schleuderscheiben 7 mit darauf angeordneten Wurfelementen 8 angeordnet. Die Schleuderscheiben 7 rotieren in bekannter Weise ineinander entgegengesetztem Drehsinn.

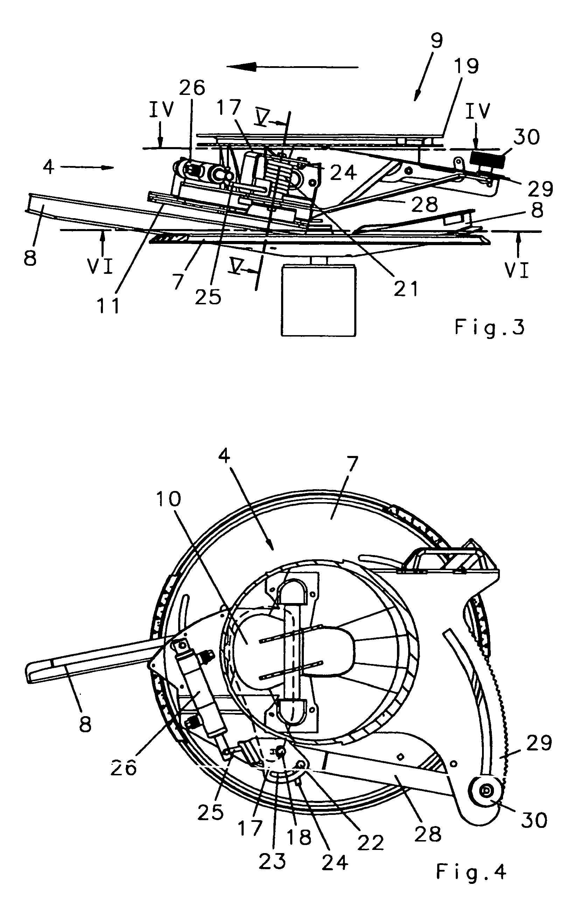

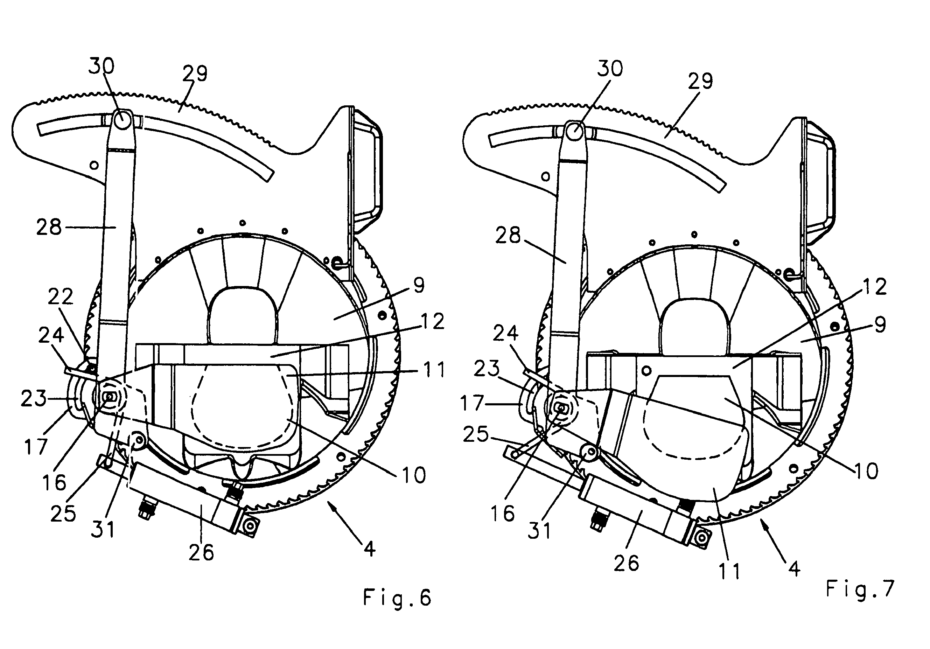

Die jeweilige Dosiereinrichtung 4 weist ein topfförmiges Trichterelement 9 auf, in dessen Boden 12 zumindest eine als Auslauföffnung 10 ausgebildete Durchlassöffnung angeordnet ist. Die Durchlassöffnung 10 wirkt mit einem Schieber 11 zusammen. Über den Schieber 11, der unterhalb des Bodens 12 des bodenförmigen Bereiches des Trichterelementes 9 der Dosiereinrichtung 4 angeordnet ist, ist die Öffnung 10 verschließbar und in ihrer Öffnungsweise einstellbar. Der Schieber 11 ist an einem an dem Trichterelement 9 der Dosiereinrichtung 4 in der Schwenkhülse 13 gelagerten Schwenkbolzen 14 verschwenkbar gegenüber der Durchlassöffnung 10 angeordnet. Der Schieber 11 ist drehfest an der Unterseite des Schwenkbolzens 14 mittels eines Verbindungselementes 15 und durch Formschluss befestigt. In den Fig. 6 und 7 ist das Verbindungselement, welches als Schraube 15 ausgebildet ist, nicht eingezeichnet, um die Formschlussverbindungen 6 von Bolzen 14 und Schieber 11 zu zeigen. An der Oberseite des Schwenkbolzens ist das als Hebelelement 17 ausgebildete Mitnahmeelement ebenfalls drehfest mittels eines Verbindungselementes 18 und durch Formschluss 19 angeordnet. In der Fig. 4 ist das als Schraube 17 ausgebildete Verbindungselement nicht eingezeichnet, um die Formschlussverbindung 18 zu zeigen.

Der Schieber 11 ist in einer nicht dargestellten an dem Boden 12 der Dosiervorrichtung 4 befestigten Schiebeführung abdichtend gegenüber dem Boden 12 geführt.

Das Trichterelement 9 der Dosiereinrichtung 4 ist mittels eines Drehflansches 19 an dem unteren Bereich der Auslauftrichter 3 um eine aufrechte Drehachse verdrehbar befestigt und mittels geeigneter Mittel in die jeweilige Position festsetzbar. Durch die Verdrehung des Trichterelementes 9 mit der Auslauföffnung 10 gegenüber der Schleuderscheibe 7 lässt sich die Aufgabefläche des sich im Vorratsbehälter 1 befindlichen Materials auf die jeweilige Schleuderscheibe 7 einstellen.

Der Schwenkbolzen 14 ist in einer an dem Boden 12 des Trichterelementes 9 der Dosiereinrichtung 4 angeordneten Schwenkhülsen 13 verdrehbar angeordnet. Auf diese Schwenkhülse 13 und somit um den Schwenkbolzen 14 herum sind die Federwindungen 20 der Schenkelfeder 21 aufgeschoben. Das Hebelelement 17 ist als Mitnahmeelement und Verstellelement für den Schieber 11 ausgestaltet. An dem Hebelelement 17 ist das Ansatzstück 22 angeordnet, welches im Ausführungsbeispiel als in einem Langloch 23 verstellbar angeordnetes Schraubenelement ausgebildet ist. Der eine Schenkel 24 der Schenkelfeder 21 liegt an dem Ansatzstück 22 an. Der andere Schenkel 25 der Schenkelfeder 21 bildet ein Zwischenelement und ist an dem als doppeltwirkender Hydraulikzylinder 26 ausgebildeten Verstellelement angeordnet. Durch die Ausgestaltung des Verstellelementes als doppeltwirkender Hydraulikzylinder 26 ist das Verstellelement in zwei entgegengesetzten Einstellrichtungen wirksam. Das auf der Oberseite des Schwenkbolzens 14 angeordnete und als Hebelelement 17 ausgebildete Mitnahmeelement ist zu dem Bereich, an dem der Schenkel 25, der an dem Verstellelement 26 angeordnet ist, nach unten abgebogen und weist in seinem unteren Bereich ein Langloch 27 auf, in welchem der als Zwischenelement ausgebildete Schenkel 25 der Schenkelfeder 21 verschiebbar angeordnet ist. Aufgrund, dass das Zwischenelement von dem Schenkel 25 der Schenkelfeder 21 gebildet wird ist das Zwischenelement gegenüber dem Schieber 11 gegen Federkraft frei bewegbar angeordnet. Das Langloch 27 weist eine Länge auf, die größer ist als der Verstellweg des Verstellelementes 26.

Auf der Schwenkhülse 13 bzw. dem Schwenkbolzen 14 ist an dem Boden 12 des Trichterelementes das als zweiarmiger Hebel ausgebildete Einstellelement 28 verschwenkbar angeordnet und anhand einer an dem trichterförmigen Dosierelement 9 angeordneten Einstellkulisse 29 in verschiedenen Positionen einstellbar und festsetzbar durch ein geeignetes Festsetzmittel 30, im Ausführungsbeispiel eine als Rändelschraube ausgebildetes Schraubenelement. An dem Einstellhebel 28 ist das Anschlagelement 31 angeordnet. Dieses Anschlagelement 31 ist auf der anderen Seite des Schwenkbolzens 14 an dem Hebelelement 28 als das Festsetzmittel 30 angeordnet. An dem Anschlagelement 31 kommt der Schieber in seiner Öffnungsstellung zur Anlage, so dass über dieses Hebelelement 28 in Verbindung mit dem Anschlagelement 31 die durch den Schieber 11 entsprechend des eingestellten Anschlagelementes 31 der freigegebene Durchflussquerschnitt der Auslauföffnung 10 eingestellt und bestimmt wird.

Um den Schieber aus der in Fig. 6 dargestellten Schließposition in die in Fig. 7 dargestellte beispielhafte Öffnungsposition zu bringen, wird der Hydraulikzylinder 26 mit Druck beaufschlagt, so dass er ausfährt. Hierdurch wird der an dem Hydraulikzylinder 26 befestigte als Zwischenelement 25 ausgebildete Schenkel der Schenkelfeder 20 in dem Langloch 27 verschoben. Über die Schenkelfeder 20 durch die Anlage des Schenkels 24 an dem Hebelelement 17 angeordneten Anschlagelement 22 wird der Schieber 11 in seine Öffnungsposition solange verschwenkt, bis der Schieber 11 an dem Anschlagelement 31 anliegt. Wenn nun der Schieber nicht ganz geöffnet werden muss, sondern in Zwischenöffnungsstellung, die durch das einstellbare Anschlagelement 31 bestimmt wird, eingenommen hat, kann der Kolben des Hydraulikzylinders 26 gegen die Kraft der Schenkelfeder 21 weiter ausgefahren werden. Der Schenkel 25 wird lediglich in dem Langloch 27 des Mitnahmeelementes 17 weiter verschoben.

Wenn jetzt während der Ausbringarbeit durch einen Druckabfall in der den Kolben des Hydraulikzylinders 26 beaufschlagten Hydraulikleitung abfallen sollte, so bewegt die Schenkelfeder 21 bzw. drückt den Kolben nur solange zurück, bis der Schenkel 25 an dem Ende des Langloches 27 des Mitnahmeelementes 17 anliegt. Wenn der Schenkel 25 der Schenkelfeder 21 an dem Ende des Langloches 27 anliegt kann die Feder keine Kraft mehr auf das Verstellelement 26 ausüben.

Wenn der Schieber 11 in Schließstellung gebracht werden soll, d.h. dass die Durchlassöffnung 10 verschlossen werden soll, wird der Kolben des Hydraulikzylinders 26 mit Druck beaufschlagt, so dass er einfährt. Hierbei kommt der als Zwischenelement ausgebildete Schenkel 25 der Schenkelfeder 21 an dem Ende des Langloches 27 zur Anlage und zieht über das Mitnahmeelement 17 den Schieber 11 in Schließstellung.

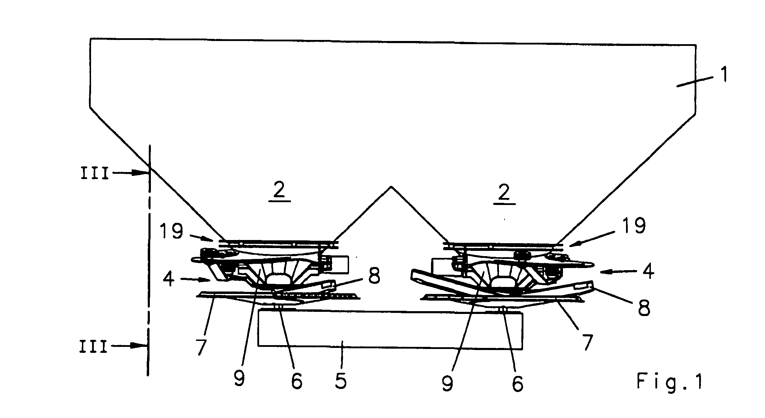

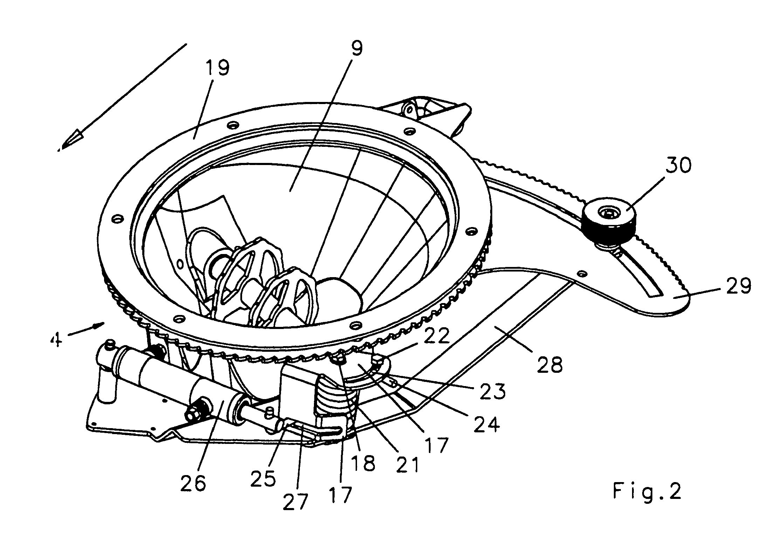

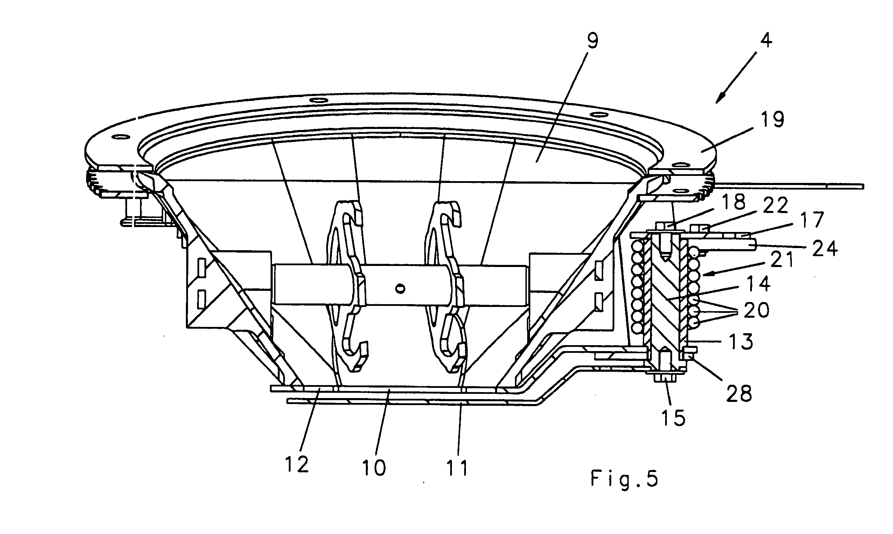

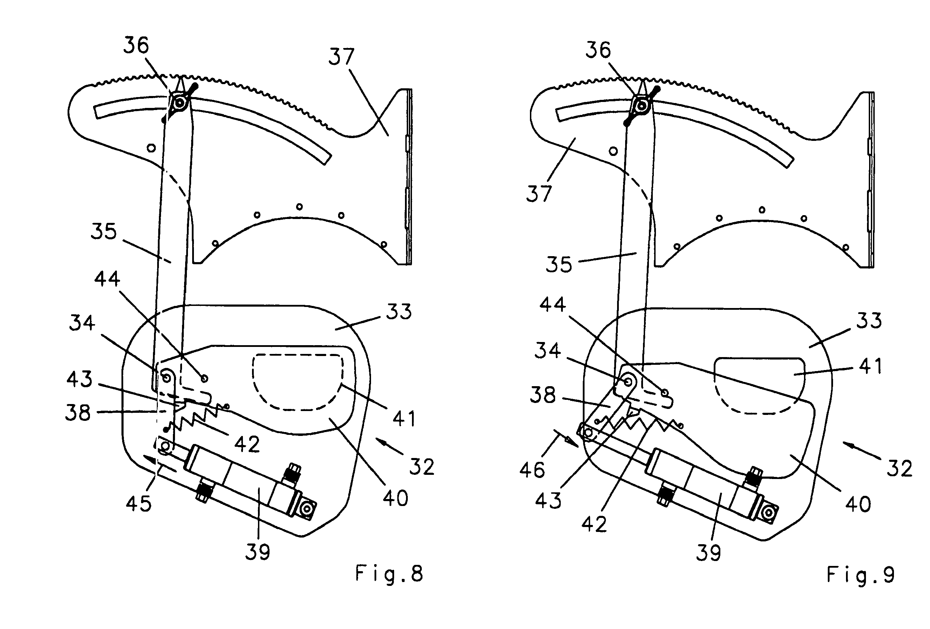

Die Dosiereinrichtung 32 nach den Fig. 8 und 9 unterscheidet sich von der Dosiereinrichtung 4 gemäß den Fig. 1-7 durch eine andere Ausgestaltung des Federelementes und der Betätigung des Schiebers.

An dem Bodenelement 33 der Dosiereinrichtung 32 ist der Schwenkbolzen 34 angeordnet. Auf diesem Schwenkbolzen 34 ist der Einstellhebel 35 schwenkbar gelagert. Dem Einstellhebel 35 ist beabstandet zu dem Schwenkbolzen 34 ein Festsetzelement 36 in Form einer Flügelschraube und einer Einstellkulisse 37 als Festsetzmittel zur Einstellung und Festsetzung des Einstellhebels 35 zugeordnet. Die Einstellkulisse 37 ist an der Dosiereinrichtung 32 ortsfest gegenüber der Bodenplatte 33 angeordnet. Des weiteren ist auf dem Schwenkbolzen 34 ein Zwischenhebel 38 angeordnet, an dessen dem Schwenkbolzen 34 abgewandten Ende ist das als doppeltwirkender Hydraulikzylinder 39 ausgebildete Verstellelement angeordnet ist. Des weiteren ist auf dem Schwenkbolzen 34 der Schieber 40 verschwenkbar angeordnet, um den Durchlassquerschnitt der in der Bodenplatte 33 der Dosiereinrichtung 32 angeordneten Auslassöffnung 41 einzustellen oder die Auslassöffnung 41 zu verschließen. Des weiteren ist zwischen dem Schieber 40 und dem Hebel 38 ein als Zugfeder 42 ausgebildetes Federelement angeordnet. Das Hebelelement 38 bildet das Zwischenelement, an dem das Verstellelement 39 und die Zugfeder 42 angeordnet sind. An dem Schieber 40 ist ein Mitnahmeelement 43 angeordnet, welches mit dem Zwischenelement 38 zusammenwirkt. Es ist auch möglich, dass Mitnahmeelement 43 an dem Hebel 38 anzuordnen.

Des weiteren ist an dem Schieber 40 ein Anschlagelement 44 angeordnet, welches mit dem Einstellhebel 35 zusammen wirkt.

Durch die Anlage des Anschlagelementes 44 an dem Einstellhebel 35 wird die Öffnungsweite, bzw. der Durchlassquerschnitt der Auslassöffnung 41 bestimmt.

Wenn der Schieber 40 aus der in Fig. 8 dargstellten Schließstellung in die in Fig. 9 beispielhaft dargestellte Öffnungsstellung gebracht werden soll, wird das als Hydraulikzylinder 39 ausgebildete Verstellelement betätigt. Hierdurch wird das Zwischenelement 38 in Pfeilrichtung 45 verschwenkt und der Schieber 40 wird über die Zugfeder 42 in Öffnungsstellung entsprechend Fig. 9 gezogen und zwar so lange, bis das Anschlagelement 44 des Schiebers 40 an dem Einstellhebel 35 zur Anlage kommt. Wenn der Hydraulikzylinder 39 jetzt noch weiter betätigt wird, wird der Zwischenhebel 38 zwar weiter verschwenkt und die Zugfeder 42 wird weiter auseinander gezogen ohne dass jedoch zu starke Kräfte auf den Schieber 40 und den Einstellhebel 35 einwirken.

Wenn der Schieber 40 aus der in Fig. 9 dargestellten Öffnungsstellung in die in Fig. 8 dargestellte Schließstellung verbracht werden soll, wird das als Hydraulikzylinder 39 ausgebildete Verstellelement entsprechend betätigt und der Zwischenhebel 38 wird in Pfeilrichtung 46 verschwenkt. Hierbei kommt der Zwischenhebel 38, an dem am Schieber 40 angeordneten Mitnahmeelement 43 zur Anlage. Hierdurch wird der Schieber 40 in seine Schließstellung entsprechend Fig. 8 gezogen.

## Patentansprüche

1. Dosiereinrichtung einer einen Vorratsbehälter aufweisenden landwirtschaftlichen Verteilmaschine insbesondere Schleuderstreuer, wobei die Dosiereinrichtung zumindest eine mit einem verstellbar angeordneten Schieber (11, 40) verschließbare und in ihrer Öffnungsweite einstellbare und im Boden des Vorratsbehälters angeordnete Durchlassöffnung (10, 41) aufweist, wobei der Schieber (11, 40) mittels eines als doppeltwirkender Hydraulikzylinder (26, 39) ausgebildetes in zwei Einstellrichtungen wirksames Verstellelement in seine jeweilige Schließ- und Öffnungsstellung bringbar ist und in seiner Öffnungsstellung an einem vorzugsweise einstellbaren Anschlagelement zur Anlage kommt, wobei zwischen dem Schieber (11, 40) und dem Verstellelement (26, 39) ein mit dem Schieber (11, 40) zusammenwirkendes Zwischenelement (25, 38) angeordnet ist, wobei dem Zwischenelement (25, 38) ein auf den Schieber (11, 40) in Richtung seiner Öffnungsstellung einwirkendes Federelement (21, 42) zugeordnet ist, wobei das Zwischenelement (25, 38) gegenüber dem Schieber (11, 40) in Bewegungsrichtung des Schiebers (11, 40) bewegbar angeordnet ist, wobei das Zwischenelement (25, 38) mit dem Schieber (11, 40) und/oder einem an dem Schieber (11, 40) angeordneten Mitnahmeelement (17 ,43) in Richtung seiner Schließstellung zusammenwirkt, wobei das Federelement (21, 42) zwischen dem Schieber (11, 40) und dem Zwischenelement (25, 38) angeordnet ist.

2. Dosiereinrichtung nach Anspruch 1, **dadurch gekennzeichnet, dass** das Federelement als Schenkelfeder (21) ausgebildet ist, dass der eine Schenkel (25) der Schenkelfeder (21) das Zwischenelement bildet und an dem Verstellelement (26) angeordnet ist und dass der andere Schenkel (24) der Schenkelfeder (21) mit dem Schieber (11) verbunden ist.

3. Dosiereinrichtung nach einem oder mehreren vorstehenden Ansprüche, **dadurch gekennzeichnet, dass** das Mitnahmeelement (17) des Schiebers ein Langloch (27) aufweist, dass in diesem Langloch der an dem Verstellelement (26) angeordnete Schenkel (25) der Schenkelfeder (21) bewegbar angeordnet ist.

4. Dosiereinrichtung nach Anspruch 3, **dadurch gekennzeichnet, dass** beim Überführen des Schiebers (11) in seine Schließstellung durch das Verstellelement (26) der am Verstellelement (26) angeordnete Schenkel (25) der Schenkelfeder (21) an dem einen Ende des Langloches (27) anliegt.

5. Dosiereinrichtung nach Anspruch 1, **dadurch gekennzeichnet, dass** das Verstellelement (26) als doppeltwirkender Hydraulikzylinder ausgebildet ist.

6. Dosiereinrichtung nach Anspruch 1, **dadurch gekennzeichnet, dass** das Verstellelement als elektromotorischer Aktuator ausgebildet ist.

7. Dosiereinrichtung nach Anspruch 1, wobei der Schieber über einen Schwenkbolzen an dem Boden schwenkbar gelagert ist, **dadurch gekennzeichnet, dass** das Mitnahmeelement (17) über den Schwenkbolzen (14) drehfest mit dem Schieber (11) verbunden ist.

8. Dosiereinrichtung nach Anspruch 1, **dadurch gekennzeichnet, dass** das Federelement als Zugfeder (42) ausgebildet ist, dass das Zwischenelement (38) als schwenkbar am Boden (33) gelagertes Hebelelement ausgebildet ist, dass an dem Hebelelement (38) das Verstellelement (39) und die Zugfeder (42) befestigt ist.

9. Dosiereinrichtung nach Anspruch 8, **dadurch gekennzeichnet, dass** beim Überführen des Schiebers (40) in seine Schließstellung durch das Verstellelement (39) das Hebelelement (38) an einem an dem Schieber (40) angeordneten Mitnahmeelement (44) anliegt.

10. Dosiereinrichtung nach einem oder mehreren der vorstehenden Ansprüche, **dadurch gekennzeichnet, dass** unterhalb der Dosiereinrichtung (4, 32) eine rotierend angetriebene und mit Wurfschaufeln (8) besetzte Schleuderscheibe (7) angeordnet ist.

## Claims

1. Metering device of an agricultural distributing machine, in particular centrifugal spreader, having a storage container, wherein the metering device has at least one passage opening (10, 41) which is closable by a displaceably arranged slide (11, 40) and is adjustable in the opening width thereof and is arranged in the base of the storage container, wherein the slide (11, 40) is bringable into the respective closed and open position thereof by means of a displacement element which is designed in the form of a double action hydraulic cylinder (26, 39) and is effective in two adjustment directions and, in the open position thereof, comes into contact with a preferably adjustable stop element, wherein an intermediate element (25, 38) which interacts with the slide (11, 40) is arranged between the slide (11, 40) and the displacement element (26, 39), wherein the intermediate element (25, 38) is assigned a spring element (21, 42) acting on the slide (11, 40) in the direction of the open position thereof, wherein the intermediate element (25, 38) is arranged movably in relation to the slide (11, 40) in the direction of movement of the slide (11, 40), wherein the intermediate element (25, 38) interacts with the slide (11, 40) and/or with a carry-along element (17, 43), which is arranged on the slide (11, 40), in the direction of the closed position of the slide, and wherein the spring element (21, 42) is arranged between the slide (11, 40) and the intermediate element (25, 38).

2. Metering device according to Claim 1, **characterized in that** the spring element is designed as a leg spring (21), **in that** the one leg (25) of the leg spring (21) forms the intermediate element and is arranged on the displacement element (26), and **in that** the other leg (24) of the leg spring (21) is connected to the slide (11).

3. Metering device according to one or more of the preceding claims, **characterized in that** the carry-along element (17) of the slide has an elongated hole (27), and **in that** that leg (25) of the leg spring (21) which is arranged on the displacement element (26) is arranged movably in said elongated hole.

4. Metering device according to Claim 3, **characterized in that**, when the slide (11) is transferred into the closed position thereof by means of the displacement element (26), that leg (25) of the leg spring (21) which is arranged on the displacement element (26) bears against the one end of the elongated hole (27).

5. Metering device according to Claim 1, **characterized in that** the displacement element (26) is designed as a double action hydraulic cylinder.

6. Metering device according to Claim 1, **characterized in that** the displacement element is designed as an electromotive actuator.

7. Metering device according to Claim 1, wherein the slide is mounted pivotably on the base via a pivoting bolt, **characterized in that** the carry-along element (17) is connected via the pivoting bolt (14) to the slide (11) for conjoint rotation.

8. Metering device according to Claim 1, **characterized in that** the spring element is designed as a tension spring (42), **in that** the intermediate element (38) is designed as a lever element mounted pivotably on the base (33), and **in that** the displacement element (39) and the tension spring (42) are fastened to the lever element (38).

9. Metering device according to Claim 8, **characterized in that**, when the slide (40) is transferred into the closed position thereof by means of the displacement element (39), the lever element (38) bears against a carry-along element (44) arranged on the slide (40).

10. Metering device according to one or more of the preceding claims, **characterized in that** a centrifugal disc (7) which is driven in a rotating manner and is provided with thrower blades (8) is arranged below the metering device (4, 32).

## Revendications

1. Dispositif de dosage d'une machine distributrice agricole, en particulier d'un épandeur centrifuge, comprenant un réservoir, dans lequel le dispositif de dosage comprend au moins une ouverture de passage (10, 41) qui peut être fermée à l'aide d'un tiroir (11, 40) disposé de manière déplaçable, dont la largeur d'ouverture peut être ajustée et qui est disposée dans le fond du réservoir, dans lequel le tiroir (11, 40) peut être amené à sa position de fermeture et d'ouverture respective au moyen d'un élément de réglage opérant dans deux sens d'ajustage et réalisé sous forme de cylindre hydraulique à double action (26, 39), et vient prendre appui contre un élément de butée de préférence ajustable dans sa position d'ouverture, dans lequel un élément intermédiaire (25, 38) coopérant avec le tiroir (11, 40) est disposé entre le tiroir (11, 40) et l'élément de réglage (26, 39), dans lequel un élément de ressort (21, 42) agissant sur le tiroir (11, 40) dans la direction de sa position d'ouverture est associé à l'élément intermédiaire (25, 38), dans lequel l'élément intermédiaire (25, 38) est disposé de manière mobile par rapport au tiroir (11, 40) dans la direction de déplacement du tiroir (11, 40), dans lequel l'élément intermédiaire (25, 38) coopère avec le tiroir (11, 40) et/ou un élément d'entraînement (17, 43) disposé sur le tiroir (11, 40) dans la direction de la position de fermeture de ce dernier, et dans lequel l'élément de ressort (21, 42) est disposé entre le tiroir (11, 40) et l'élément intermédiaire (25, 38).

2. Dispositif de dosage selon la revendication 1, **caractérisé en ce que** l'élément de ressort est réalisé sous forme de ressort à branches (21), **en ce que** l'une des branches (25) du ressort à branches (21) forme l'élément intermédiaire et est disposée sur l'élément de réglage (26) et **en ce que** l'autre branche (24) du ressort à branches (21) est reliée au tiroir (11).

3. Dispositif de dosage selon l'une quelconque ou plusieurs des revendications précédentes, **caractérisé en ce que** l'élément d'entraînement (17) du tiroir comprend un trou oblong (27) et **en ce que** la branche (25) du ressort à branches (21) qui est disposée sur l'élément de réglage (26) est disposée de manière mobile dans ce trou oblong.

4. Dispositif de dosage selon la revendication 3, **caractérisé en ce que**, lors du passage du tiroir (11) à sa position de fermeture au moyen de l'élément de réglage (26), la branche (25) du ressort à branches (21) qui est disposée sur l'élément de réglage (26) s'applique contre l'une des extrémités du trou oblong (27).

5. Dispositif de dosage selon la revendication 1, **caractérisé en ce que** l'élément de réglage (26) est réalisé sous forme de cylindre hydraulique à double action.

6. Dispositif de dosage selon la revendication 1, **caractérisé en ce que** l'élément de réglage est réalisé sous forme d'actionneur électromoteur.

7. Dispositif de dosage selon la revendication 1, le tiroir étant monté pivotant sur le fond au moyen d'un axe de pivotement, **caractérisé en ce que** l'élément d'entraînement (17) est relié de manière solidaire en rotation au tiroir (11) au moyen de l'axe de pivotement (14).

8. Dispositif de dosage selon la revendication 1, **caractérisé en ce que** l'élément de ressort est réalisé sous forme de ressort de traction (42), **en ce que** l'élément intermédiaire (38) est réalisé sous forme d'élément de levier monté pivotant sur le fond (33), et **en ce que** l'élément de réglage (39) et le ressort de traction (42) sont fixés à l'élément de levier (38).

9. Dispositif de dosage selon la revendication 8, **caractérisé en ce que**, lors du passage du tiroir (40) à sa position de fermeture au moyen de l'élément de réglage (39), l'élément de levier (38) s'applique contre un élément d'entraînement (44) disposé sur le tiroir (40).

10. Dispositif de dosage selon l'une quelconque ou plusieurs des revendications précédentes, **caractérisé en ce qu'**un disque centrifugeur (7) entraîné en rotation et muni de pales d'éjection (8) est disposé en dessous du dispositif de dosage (4, 32).
